(19) Europäisches Patentamt / European Patent Office / Office européen des brevets

(11) **EP 2 549 415 A1**

(12) **EUROPEAN PATENT APPLICATION**

(43) Date of publication:
**23.01.2013 Bulletin 2013/04**

(51) Int Cl.:
*G06Q 10/04* (2012.01)    *F01K 23/00* (2006.01)
*G05B 17/00* (2006.01)

(21) Application number: **12177262.8**

(22) Date of filing: **20.07.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **22.07.2011 US 201113189217**

(71) Applicant: **General Electric Company
Schenectady, NY 12345 (US)**

(72) Inventors:
• **Mazzaro, Maria Cecilia
Greenville, SC South Carolina 29615 (US)**
• **Adhami, Mohammad Waseem
Cincinnati, OH Ohio 45215-1988 (US)**
• **Chavez Valdovinos, Juan Paulo
02-256 Warsaw (PL)**
• **Pandey, Achalesh Kumar
Greenville, SC South Carolina 29615 (US)**
• **Talukdar, Atanu
560066 Karnataka (IN)**
• **Trejo, Adriana Elizabeth
76030 Queretaro (MX)**
• **Vega Paez, Jose
76030 Queretaro (MX)**

(74) Representative: **Williams, Andrew Richard
Global Patent Operation-Europe
GE International Inc
15 John Adam Street
London WC2N 6LU (GB)**

(54) **Forecasting engine degradation of gas turbines using a personalized model**

(57)    A system, in one embodiment, provides means for acquired measurements of one or more operating parameters of a turbine engine. The system further includes means for determining an estimated value of a performance parameter of interest at a current time based at least partially upon the acquired measurements, means for adjusting a deterioration model at the current time based on a historical set of estimated values from previous times, and means for forecasting performance changes in the turbine engine based on the adjusted deterioration model.

FIG. 2

**Description**

BACKGROUND OF THE INVENTION

The subject matter disclosed herein relates generally to gas turbine engines and, more particularly, to a system and method for forecasting engine degradation using a personalized model-based approach.

As gas turbine engines operate, engine efficiency and performance may deteriorate over time. This degradation in performance may be due to various factors, such as engine wear or engine component damage. Measuring or otherwise monitoring the degradation of a gas turbine engine may be useful in assessing both when and what type of maintenance actions should be performed. Further, early detection of problems or performance anomalies may help prevent component or engine failure.

For monitoring the performance degradation of a gas turbine engine, some existing control systems may utilize a computer-implemented model that is designed to model the expected performance and degradation of the gas turbine engine over time. For instance, based upon one or more sensed input and/or output parameters acquired during operation of the gas turbine engine, the control system may provide one or more estimated states of the gas turbine engine in accordance with the model. For instance, the model may provide estimated states relating to parameters that are not necessary directly measurable by sensors, such as certain parameters relating to turbine efficiency, compressor efficiency, and so forth. Accordingly, if the state estimations provided by the model indicate that particular components of the turbine engine have reached a state of degradation in which repair and/or maintenance is either needed or recommended, an operator may take such action. For instance, the operator may take the gas turbine engine offline and initiate any necessary maintenance/repair.

One drawback with existing performance degradation monitoring techniques is that existing "generic" estimation models assume that all gas turbine engines of a particular make, model, and design will behave the same way over the course of their operational lifetime, when in fact this is not usually the case. That is, two gas turbine engines of the same type, design, make, and/or model that are built on the same assembly line with the same types of components may not necessary degrade at the same rate in real world use, even if operated under similar conditions. As a result, the use of a generic engine estimation model for a particular type (e.g., a specific make, model, design, etc.) of gas turbine engine may not necessarily provide accurate state estimations for all gas turbine engines of that type. Further, existing control systems that utilize generic estimation models may not be able to accurately forecast equipment degradation. Moreover, existing estimation models may be static in the sense that they are not updated based on actual turbine performance parameters over time, and thus are not able to adapt to provide accurate state estimations for a given turbine engine. As a result, it may be challenging to accurately determine when equipment maintenance and/or repair, which may include cleaning and wash procedures, preventative care, and/or component replacement/repair, etc., should be performed.

BRIEF DESCRIPTION OF THE INVENTION

In one embodiment, a system includes a power generation device configured to generate a power output. The system includes a plurality of sensors that measure one or more operating parameters during operation of the power generation device, including at least an input parameter and at least an output parameter. Further, the system includes a control system having estimator logic that determines an estimated value for a performance parameter of interest at a current time step based at least partially upon the measured input and output parameters, and forecasting logic configured to identify a historical set of the estimated values over a plurality of previous time steps, adjust a deterioration model based on the historical set of estimated values, and forecast performance changes in the power generation device based on the adjusted deterioration model.

In another embodiment, a system includes a state estimator configured to determine an estimated value for a performance parameter of interest and a corresponding estimation error at each of a plurality of time steps. The system also includes an analyzer configured to receive the estimated value of the performance parameter and the estimation error corresponding to a current time step, determine one or more confidence bands for a distribution function of the estimation error at the current time step, evaluate an estimated value of the performance parameter at the next time step based on the confidence bands determined at the current time step, and to determine whether the performance parameter at the next time step falls within a selected confidence band.

In yet a further embodiment, a system includes means for acquiring measurements of one or more operating parameters of a turbine engine. The system further includes means for determining an estimated value of a performance parameter of interest at a current time based at least partially upon the acquired measurements, means for adjusting a deterioration model at the current time based on a historical set of estimated values from previous times, and means for forecasting performance changes in the turbine engine based on the adjusted deterioration model.

BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:

FIG. 1 is a block diagram depicting an embodiment of a system that includes a gas turbine engine;

FIG. 2 is a block diagram depicting an embodiment of a control system having logic configured to provide personalized performance degradation forecasting for one or more components of the gas turbine engine of FIG. 1, in accordance with an embodiment of the present invention;

FIG. 3 is a flow chart depicting a process for providing personalized performance degradation forecasting for a component of the gas turbine engine that may be performed by the control system shown in FIG. 2, in accordance with an embodiment of the present invention;

FIG. 4 is a graph showing the adjustment of a deterioration model based on historical performance data to provide a forecast of performance degradation for a component of the gas turbine engine;

FIG. 5 is a flow diagram depicting a process for evaluating estimated performance parameter values against a selected confidence band; and

FIG. 6 is a graph showing a probability density function of estimation error.

DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

As discussed further below, certain embodiments provide techniques for providing personalized equipment degradation forecasting for gas turbine engines. In one embodiment, sensor measurements taken from the gas turbine engine are provided to a state estimator block. The state estimator block may, using the sensor measurements and predicted outputs from a software-implemented model of the gas turbine engine, determine estimated values of certain performance parameters at time steps based on a sampling rate. The output of the state estimator block may be fed back to the model, which is adaptively updated to more closely model the actual performance of the gas turbine engine. Over time, the estimate values may form a time-based data series. A forecasting module may analyze historical estimate values and may adjust a deterioration model based on the analysis. Using the adjusted deterioration model, maintenance and repair schedules for the gas turbine engine may be planned more effectively and accurately.

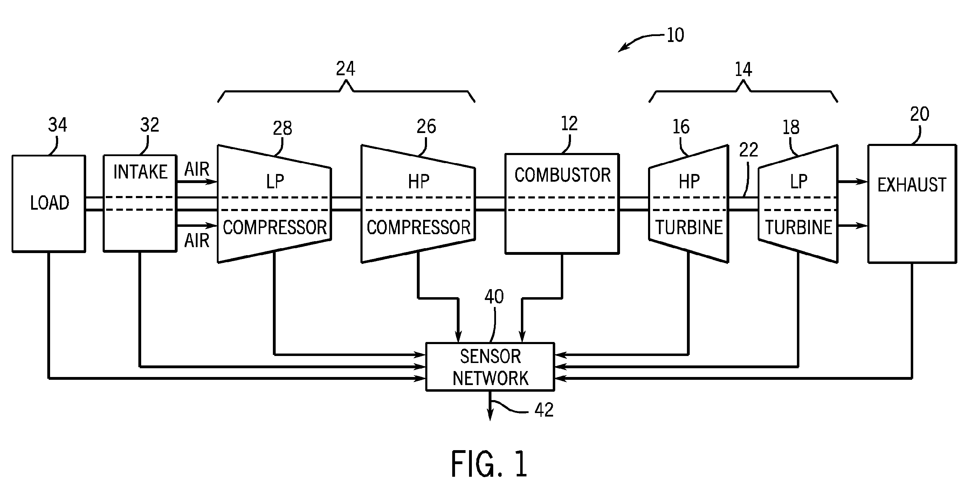

Turning now to the drawings, FIG. 1 illustrates a block diagram showing an embodiment of gas turbine system 10 to which the personalized performance degradation monitoring and forecasting techniques set forth in present disclosure may be applied. The turbine system 10 may use liquid or gas fuel, such as natural gas and/or a hydrogen rich synthetic gas, to run the turbine system 10. For instance, fuel nozzles may intake a fuel supply, mix the fuel with air, and distribute the air-fuel mixture into a combustor 12. The combustion of the air-fuel mixture may create hot pressurized gases within the combustor 12, which are directed through a turbine section 14 that includes a high-pressure (HP) turbine 16 and a low-pressure (LP) turbine 18, and towards an exhaust outlet 20. In the illustrated embodiment, the HP turbine 16 may be part of a HP rotor, and the LP turbine 18 may be part of a LP rotor. As the exhaust gases pass through the HP turbine 16 and LP turbine 18, the gases may force turbine blades to rotate a drive shaft 22 extending along a rotational axis of the turbine system 10. As illustrated, drive shaft 22 is connected to various components of the turbine system 10, including a HP compressor 26 and a LP compressor 28.

The drive shaft 22 may include one or more shafts that may be, for example, concentrically aligned. The drive shaft 22 may include a shaft connecting the HP turbine 16 to the high-pressure compressor 26 of a compressor section 24 of the turbine system 10 to form a HP rotor. For example, the HP compressor 26 may include compressor blades coupled to the drive shaft 22. Thus, rotation of turbine blades in the HP turbine 16 may cause the shaft connecting the HP turbine 16 to the HP compressor 26 to rotate the compressor blades within the HP compressor 26, which compresses air in the HP compressor 26. Similarly, the drive shaft 22 may include a shaft connecting the LP turbine 18 to a low-pressure compressor 28 of the compressor section 24 to form a LP rotor. Thus, in the illustrated embodiment, the drive shaft 22 may include both an HP and an LP rotor for driving the HP compressor/turbine components and the LP compressor/turbine components, respectively. The LP compressor 28 may include compressor blades coupled to the drive shaft 22. Thus, rotation of turbine blades in the LP turbine 18 causes the shaft connecting the LP turbine 18 to the LP compressor 28 to rotate compressor blades within the LP compressor 28.

The rotation of compressor blades in the HP compressor 26 and the LP compressor 28 may act to compress air that is received via an air intake 32. As shown in FIG. 1, the compressed air is fed to the combustor 12 and mixed with fuel to allow for higher efficiency combustion. Thus, the turbine system 10 may include a dual concentric shafting arrangement, wherein LP turbine 18 is drivingly connected to LP compressor 28 by a first shaft of the drive shaft 22, while the HP turbine 16 is similarly drivingly connected to the HP compressor 26 by a second shaft in the drive shaft 22, which may be disposed internally and in a concentric arrangement with respect to the first shaft. In the illustrated embodiment, the shaft 22 may also be connected to load 34, which may include any suitable device that is powered by the rotational output of turbine system 10. For example, the load 34 could include a vehicle or a stationary load, such as an electrical generator in a power plant or a propeller on an aircraft. In some embodiments, the gas turbine system 10 may be an aeroderivative gas turbine used in marine propulsion, industrial power generation, and/or marine power generation applications. By way of example only, the gas turbine system 10 may, in one embodiment, be a model of a gas turbine system under the designations LM500, LM1600, LM2500, LM6000, or LMS100, all of which are either currently or were formerly manufactured by General Electric Aviation of Evandale, Ohio, which is a subsidiary of General Electric Company, headquartered in Fairfield, Connecticut. Further, it should be noted that while the turbine system depicted in FIG. 1 is a representation of a cold-end system (e.g., the load 34 is disposed upstream from the intake with respect to the air flow direction), other embodiments may also include hot-end systems (e.g., with the load 34 being disposed downstream from the exhaust 20 with respect to the air flow direction).

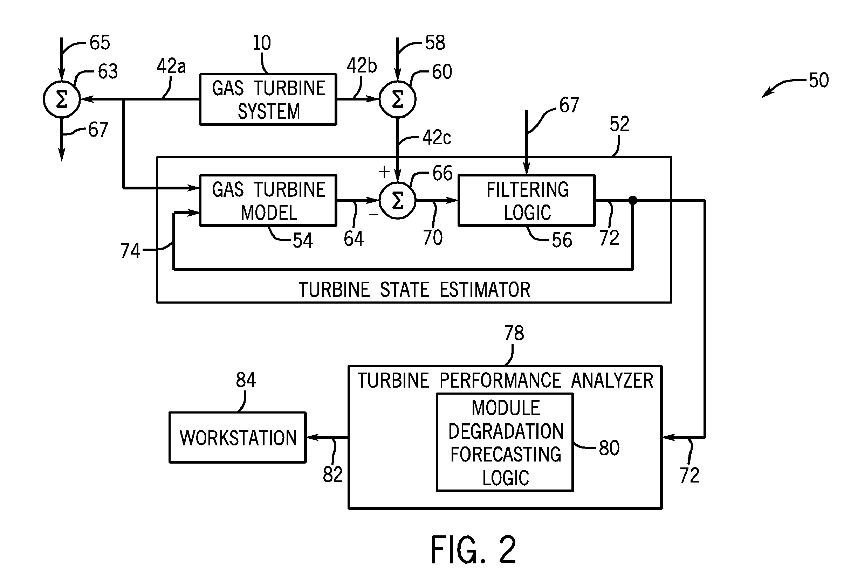

To provide turbine performance information to a turbine control system configured to implement personalized performance degradation monitoring and forecasting, which will be discussed in more detail below in FIG. 2, the gas turbine system 10 may include a set of multiple sensors 40, referred to herein as a sensor network for simplicity, wherein the sensors 40 are configured to monitor various turbine engine parameters related to the operation and performance of the turbine system 10. The sensors 40 may include, for example, one or more inlet sensors and outlet sensors positioned adjacent to, for example, the inlet and outlet portions of the HP turbine 16, the LP turbine 18, the HP compressor 26 the LP compressor 28, and/or the combustor 12, as well as the intake 32, exhaust section 20, and/or the load 34. Further, the sensors 40 may include measured and/or virtual sensors. As can be appreciated, a measured sensor may refer to a physical sensor (e.g., hardware) that is configured to acquire a measurement of a particular parameter(s), whereas a virtual sensor may be utilized to obtain an estimation of a parameter of interest and may be implemented using software. Virtual sensors may be configured to provide estimated values of a parameter that is difficult to directly measure using a physical sensor. By way of example, these various inlet and outlet sensors 40, which may include measured and virtual sensors, may sense parameters related to environmental conditions, such as ambient temperature and pressure and relative humidity, as well as various engine parameters related to the operation and performance of the turbine system 10, such as compressor speed ratio, inlet differential pressure, exhaust differential pressure, inlet guide vane position, fuel temperature, generator power factor, water injection rate, compressor bleed flow rate, exhaust gas temperature and pressure, compressor discharge temperature and pressure, generator output, rotor speeds, turbine engine temperature and pressure, fuel flow rate, core speed. The sensors 40 may also be configured to monitor engine parameters related to various operational phases of the turbine system 10. As will be discussed further below in FIG. 2, measurements 42 of turbine system parameters obtained by the sensor network 40, may be provided to a turbine control system configured to implement personalized performance degradation monitoring and forecasting.

FIG. 2 is a block diagram depicting a turbine control system 50 in accordance with an embodiment of the present invention. The illustrated control system 50 includes a turbine state estimator block 52. In the present embodiment, the turbine state estimator 52 includes a gas turbine model 54 and filtering logic 56. In operation, the state estimator 52 receives various measurements 42, which may be provided by the sensors 40 described in FIG. 1. For instance, the received measurements 42a may represent measured input values of various turbine parameters. By way of example only, such parameters may include ambient temperature, ambient pressure, relative humidity, compressor speed ratio, inlet pressure drop, exhaust pressure drop, inlet guide vane angle, fuel temperature, generator power factor, water injection rates, and compressor bleed flow. The sensor measurements 42b may represent measured output values, such as generator output, exhaust temperature, compressor discharge temperature, and compressor discharge pressure. As shown in FIG. 2, the measurements 42b may be combined (using summing logic 60) with signals 58 representative of output bias noise. Thus, the output 42c of the logic 60 represents the measurements 42b adjusted to factor in a noise component 58. Though not explicitly shown in FIG. 2, the state estimator 52 may include an input block that receives the turbine performance measurements 42, as well as machine state data (e.g., steady state, load condition, etc.) and selects valid samples for further processing by the turbine state estimator 52. As can be appreciated, data corresponding to measurements of turbine parameters may be sampled by the turbine state estimator 52 either continuously or at a given sample rate. For example, this sample rate may be one sample per second, per minute, every 5 minutes, 10 minutes, 30 minutes, per hour, or any other desired unit of time. In some embodiments, certain parameters may have different sampling rates.

As shown in FIG. 2, the measured inputs 42a may be received and processed by the turbine model 54. In certain embodiments, the turbine model 54 may include a physics-based model, a data fitting model (e.g., such as a regression model or neural network model), a rule-based model, or an empirical model, or may utilize a combination of such models. For example, in an embodiment that utilizes a physics-based model, the turbine model 54 may be configured to individually model each module of the turbine system 10 to determine performance degradation parameters relating to physical wear or usage.

Based on the received measured input values 42a, the turbine model 54 may generate a set of predicted output values, referred to herein by reference number 64, which is provided to logic 66. As shown, logic 66 may provide one or more outputs 70, which correspond to the difference between predicted outputs provided by the model 54 and corresponding measured output values 42c (with noise component 58 added). These difference outputs 70 are sometimes referred to as residuals. The residuals 70 may then be provided to a filter 56, which may be configured to provide one or more estimated states 72 of certain performance parameters of the turbine system 10. For instance, in one embodiment, the estimated states may represent performance parameters relating to compressor efficiency, compressor flow, turbine efficiency, and/or fuel flow. In embodiments that utilize a physics-based model for the turbine model 10, performance changes at the component level may be represented mathematically by these estimate state parameters. As further depicted in FIG. 2, the control system 50 may also provide the capability to correct input sensor biases. For instance, the sensor input measurements 42a may be summed with signal 65 using the summing logic 63, wherein the signal 65 represents a sensor biasing factor. The output 67 of the summing logic 63 may be provided to the filtering logic 56.

In one contemplated embodiment, the filter 56 may be configured to implement a recursive estimation algorithm capable of propagating the statistics of estimation error in the estimated state parameters over time. For instance, in one such embodiment, the filter 56 may utilize Kalman filtering using a non-linear Kalman-type filter, such as an extended Kalman filter or an unscented Kalman filter. To provide an example, a general description of an embodiment of the turbine state estimator 52 that utilizes an extended Kalman filter is described below.

Generally, an extended Kalman filtering technique may be applied to estimate state parameters of a discrete-time controlled process governed by non-linear characteristics, as opposed to discrete Kalman filtering, which may focus on linear processes. An extended Kalman filter may use *a priori* knowledge of noise statistics and may linearize about a current mean and covariance value, such as by using partial derivatives of the process and measurement functions to compute estimates. In the context of an extended Kalman filter, the measured output values 42c may be represented by the variable $Y_k$, where k represents a current step in time. A corresponding predicted output from the model 54 may be represented by Equation 1 below:

$$\hat{Y}_k = h(\hat{X}_k^-), \qquad \text{(Equation 1)}$$

wherein $\hat{Y}_k$ represents the predicted output at step k, $\hat{X}_k^-$ represents an *a priori* state estimate of a state parameter (X) of interest at step k, and *h* represents a non-linear function relating the state parameter (X) to the measurement (Y). Further, the *a priori* state estimate of the state parameter may be determined in accordance with Equation 2 below:

$$\hat{X}_k^- = f\left(\hat{X}_{k-1}\right), \qquad \text{(Equation 2)}$$

wherein $\hat{X}_{k-1}$ represents the previous *a posteriori* estimate of the state parameter (X) at step k-1 (e.g., the previous time step), and *f* represents a non-linear function relating the state at time step k-1 to the state at the current time step k.

The extended Kalman filter may be configured to provide a current state estimation $\hat{X}_k$ of a state parameter using the following equation:

$$\hat{X}_k = \hat{X}_k^- + K_k \left[ Y_k - \hat{Y}_k \right], \qquad \text{(Equation 3)}$$

A wherein $\hat{X}_k^-$ represents an *a priori* state estimate of the state parameter (X), $K_k$ represents a Kalman gain or weighting factor at step k, and the term $|Y_k - \hat{Y}_k|$ represents the difference between a measured output parameter from the sensors 40 and a predicted output parameter from the model 54, i.e., the residual 70.

In the present embodiment, the gain $K_k$ of the extended Kalman filter may be determined based on the following expression:

$$K_k = P_k^- H_k^T \left( H_k P_k^- H_k^T + R_k \right)^{-1}, \qquad \text{(Equation 4)}$$

wherein $P_k^-$ represents an *a priori* estimation error covariance, H represents a matrix of partial derivatives of the function *h* with respect to the estimated state parameter, and R represents a component of measurement noise covariance at step k. In this example, the *a prior* estimation error covariance, $P_k^-$ may be determined based on Equation 5 below:

$$P_k^- = F_k P_{k-1} F_k^T + G_k Q_k G_k^T, \qquad \text{(Equation 5)}$$

wherein F represents a matrix (e.g., a Jacobian matrix) of partial derivatives of the non-linear function *f* with respect to the state parameter of interest (X), $P_{k-1}$ represents the *a posteriori* estimation covariance error at step k-1, $Q_k$ represents a zero-mean process noise component, and G represents a matrix of partial derivatives of the non-linear function *f* with respect to the zero-mean process noise. By way of example, expressions for the matrices represented by F, G, and H may be expressed as follows:

$$F_{k(i,j)} = \left. \frac{\partial f_i}{\partial X_j} \right| (\hat{X}_{k-1}) \qquad \text{(Equation 6)}$$

$$G_{k(i,j)} = \left. \frac{\partial f_i}{\partial g_j} \right| \left( \hat{X}_{k-1} \right) \qquad \text{(Equation 7)}$$

$$H_{k(i,j)} = \left. \frac{\partial h_i}{\partial X_j} \right| \left( \hat{X}_{k-1} \right) \qquad \text{(Equation 8)}$$

Further, an *a posteriori* estimation of the estimation error covariance at step k, the following equation may be utilized:

$$P_k = [I - K_k H_k] P_k^-$$ (Equation 9)

In this particular example, the outputs 72 of the filtering logic 56 may include updated state estimation values $\hat{X}_k$ of turbine parameters, as well as updated estimation error covariance values $P_k$. As will be discussed in further detail below, the outputs 72 of the filtering logic 56 may be provided to the turbine performance analyzer block 78, which may be configured to provided personalized turbine module or component degradation forecasting information, as well as various other indicators pertaining to the health of the turbine system 10.

As will be appreciated, the Kalman filtering example discussed above generally estimates a state other parameter of interest for a given process using a form of feedback control, as indicated by the feedback loop 74. For instance, the filter 56 may estimate the state parameter (X) at some time and then obtain feedback in the form of noisy measurements. Thus, the equations discussed above with regard to an extended Kalman filter may be viewed as falling into a first group of "time update" equations and a second group of "measurement update equations." The time update equations, which may be represented by Equations 2 and 5, may be responsible for projecting 1\ forward in time the current state $(\hat{X}_k)$ and estimation error covariance estimates $(P_k)$ in order to determine the *a priori* estimates for the next time step. The measurement update equations, which may be represented by Equations 3, 4, and 9, handle feedback, such as by incorporating new measurements into an *a priori* estimate to obtain an improved *a posteriori* estimate. Thus, in this context, the time update equations may be considered as functions that predict state values, while the measurement update equations may be considered as functions that correct or make the predicted values more accurate. Further, while the example described above relies on Kalman filtering techniques, it should be appreciated that other embodiments of the filter 56 may utilize alternate estimation techniques, such as those based on tracking filtering, regression mapping, neutral mapping, inverse modeling, or any combination thereof, either instead of or in addition to Kalman filtering techniques.

As discussed above, certain conventional performance monitoring control systems may rely on predictions generated using generic models of the turbine system 10. For example, such generic models may be designed as average deterioration models (e.g., based on the performance of a sample of units) or as worst-case deterioration models. However, two gas turbine engines of the same type, design, make, and/or model that are built by the same manufacturer and on the same assembly line with the same types of components may not necessary degrade at the same rate in real world use, even if operated under similar conditions. Further, average and worst-case deterioration models are typically developed for a specific application. Thus, an average or worst-case deterioration model developed for a turbine engine used in a marine propulsion application may be different than one developed for an industrial power generation application.

Accordingly, as shown in FIG. 2, the present embodiment of the turbine control system 50 provides for the model 54 to be updated, thus adapting to the actual performance parameters of the turbine system 10. For instance, the outputs 72 of the filtering logic 56 may be fed back to the model 54 by the feedback loop 74. The outputs may include, for example, estimated state parameters, as well as residual values indicating differences between the predicted outputs 64 of the model 54 and the measured output values 42c, and the model 54 may adaptively update based on the feedback values 74 in order to provide future predicted values 64 that are more personalized with respect to the actual operation of the turbine system 10. In this manner, the model 54 and the filtering logic 56 of the turbine state estimator 52 may implement a model-based monitoring system to compute estimations of flow and efficiency changes within the turbine system 10 at the component or module level (e.g., compressor, combustor, and turbine).

As further shown in FIG. 2, the outputs 72 of the filtering logic 56 may be provided to the turbine performance analyzer 78. In the illustrated embodiment, the turbine performance analyzer 78 may be configured to determine various states regarding one or more modules of the turbine system 10 based on the data 72 received from the state estimator 52. For example, the analyzer 78 may use the data 72 to form a baseline from which the health status of the turbine system 10 may be assessed. Based on the determined health of the turbine system 10, which may deteriorate over time due to performance degradation, the analyzer 78 may trigger alarms and/or repair/maintenance notifications, represented here as output 82, to a workstation 84.

In the illustrated embodiment, the workstation 84 may be in communicative connection to the turbine analyzer 78, such as by a local area network, wireless network (e.g., 802.11 standards), or mobile network (e.g., EDGE, 3G, 4G, LTE, WiMAX). Further, the workstation 84 may be located in the proximity of the control system 50 or may be located remotely. Thus, in embodiments where the workstation 84 is located remotely with respect to the control system 50 and/or turbine system 10, an operator may remotely access the turbine analyzer 78 via the workstation 84 to receive the alarms and repair/maintenance notifications 82. In a further embodiment, the control system 50 may also be located either in generally close proximity to the gas turbine system 10 or may be located remotely. For instance, in one such embodiment, the manufacturer of the turbine system 10 may sell or supply the turbine system 10 to a client, and the manufacturer may offer performance monitoring services to monitor the health and performance degradation of the turbine system. In such embodiments, the control system 50 may be located at a location that is remote from the turbine system 10, and alarms and/or notifications indicated by the analyzer 78 may be transmitted to a workstation operated by the client, e.g., by e-mail, text message, or as a notification displayed in a proprietary application. In other embodiments, the control system 50 and workstation 84 may be designed as an integrated component of the turbine system 10, and may both be located in the proximity of the turbine system 10.

As discussed above, the control system 50 may be configured to provide performance degradation forecasting with regard to one or more modules of the turbine system 10. For example, as shown in FIG. 2, the analyzer 78 may include module degradation forecasting logic 80. The module degradation forecasting logic 80 may be configured to analyze a set of previous estimated state parameters from the state estimator logic 52, and to adapt the deterioration model, which may be represented at least in part by the model 54, to fit it to the set of estimated values, and to provide a forecast of turbine performance changes to be expected by the adapted or updated deterioration model.

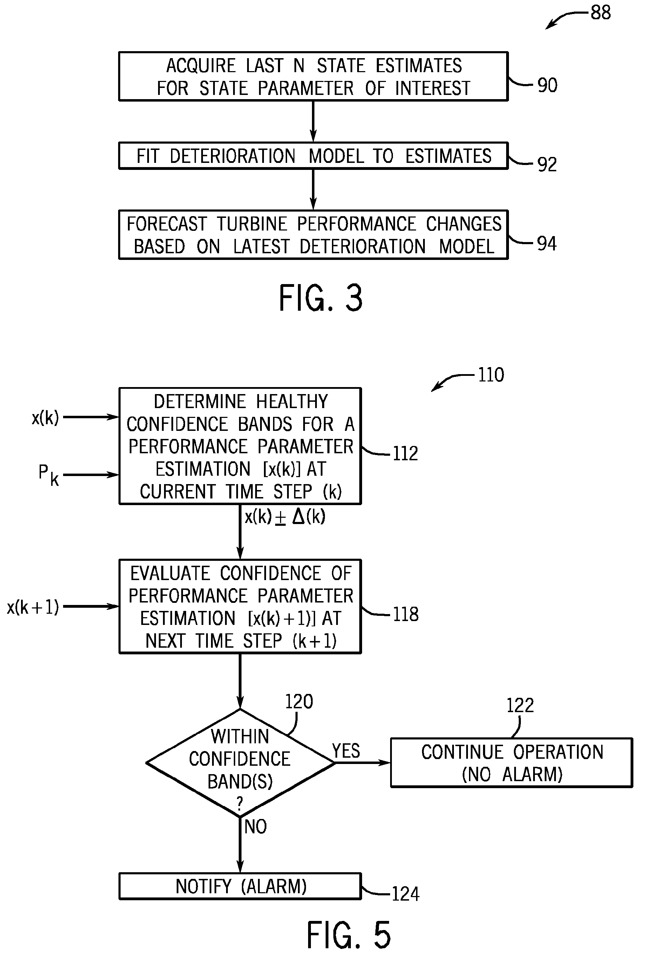

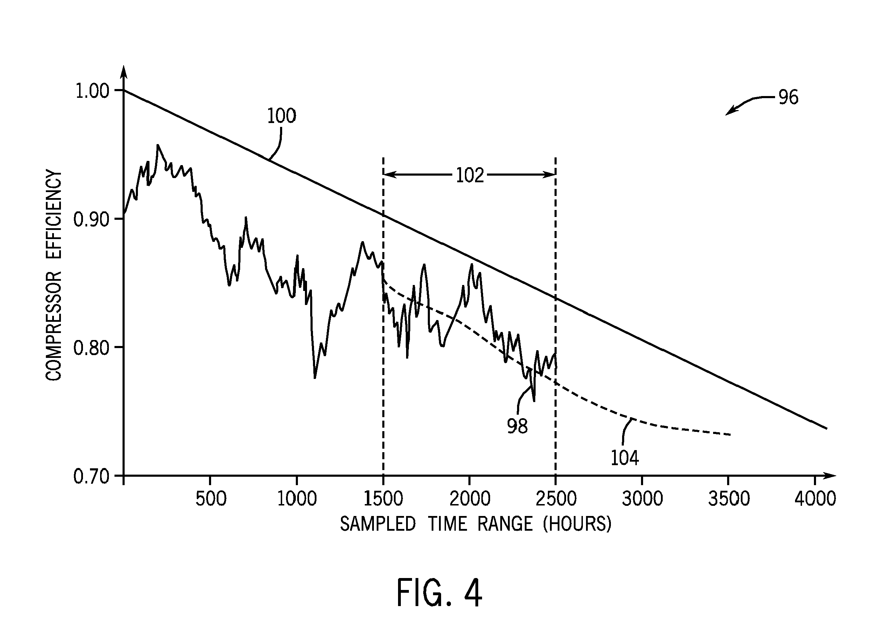

The operation of the module degradation forecasting logic 80 (referred to hereinafter as "forecasting logic") is further illustrated with reference to FIGS. 3 and 4, which will be described together below. Referring to FIG. 3, a process 88 illustrates the operation of the forecasting logic 80 in accordance with embodiments of the present invention. The process 88 may begin at step 90, at which the forecasting logic 80 acquires a historical set of N previous estimation results for a state parameter of interest. By way of example only, let us assume that one such parameter of interest relates to compressor efficiency of the compressor section 24 of the turbine system 10. Referring to FIG. 4, a graph 96 showing degradation of compressor efficiency over operation hours of the turbine system 10 is provided. As will be appreciate the data depicted in FIG. 4 is meant to be explanatory, and is not intended to necessarily represent actual performance degradation data for a specific turbine system.

In the graph 96, the sample data trace line 98 may represent estimations of compressor efficiency performance over time, as determined by the state estimator 52 (consisting of model 54 and filter 56) based on a sampling time. For example, in the graph 96, the sample data trace line 98 may represent 2500 hours of performance data regarding compressor efficiency. The performance data may be stored within a memory, database, or any suitable storage device of the control system 50 for retrieval by the forecasting logic 80. The trace line 100 may represent the initial expected performance degradation curve of the turbine system 10 in accordance with the initial state of the model 54. For example, prior to adapting the model 54 over time to provide personalized predictions in accordance with known operation of the turbine system 10, the initial model may expect a generally linear degradation in compressor efficiency of approximately 6 percent every 1000 hours of operation. Further, as shown in the graph 96, a period of interest 102 may represent the number of N previous estimation results that are acquired at step 90 of the process 88 of FIG. 3. As will be appreciated, the number of state estimates available within the period of interest 102 depends on the sampling rate at which sensor data 42 is sampled and estimations are provided by the filter 56. For instance, if the sampling rate is every 10 minutes, the period of interest 102 in FIG. 4 may contain 6000 data points over a period of 1000 hours.

Referring back to FIG. 3, from step 90, the process 88 continues to step 92, at which the deterioration model with regard to compressor efficiency, which may be represented by part of the turbine model 54, is fitted to state estimation data within the period of interest 102 on the graph 96. Referring again to FIG. 4, the dashed trace line 104 represents a best-fit curve based on the state estimates within the period of interest 102. As can be appreciated, any suitable technique for determining a best-fit curve against a time-based data set may be utilized at step 92. By way of example only, the best fit curve 104 may be determined using moving average analysis, weighted moving average analysis, linear or non-linear regression, least squares analysis, weight least squares analysis, or any other suitable method. As shown in FIG. 4, the best-fit curve 104 may forecasts performance degradation beyond the period of interest (e.g., an additional 1000 beyond 2500 hours of operation time). This may correspond to step 94 of the process 88. This curve fitting technique may also compensate for situations in which some estimation data is missing.

Based on the forecasted performance degradation information obtained from the process 88 of FIG. 3, an operator responsible for monitoring the health of the turbine system 10 may be able to better anticipate needed maintenance and/or repair activities. For instance, suppose that for a turbine engine represented in FIG. 4, maintenance is recommended when compressor efficiency drops to 75 percent. Without the adaptive forecasting techniques described herein, a static or generic deterioration model would indicate that maintenance is not required until approximately 4000 hours of operation have elapsed. However, since turbines may exhibit performance variations from unit to unit and also across different applications for which they are being used, a static deterioration model may not accurate predict performance degradation for all turbines of the same make, model, and/or design. For instance, based on the degradation forecasting curve 104 shown in FIG. 4, compressor efficiency will drop to approximately 75 percent after approximately 2800 to 2900 hours of operation.

In some embodiments, an operator may receive a notification, such as via the workstation 84, based on the degradation forecasting shown in FIG. 4 at a time prior to the turbine operation reaching approximately 2800 hours. Thus, the operator may be alerted of the need for maintenance prior to the forecasted time (e.g., at approximately 2800-2900 hours), and may take measures ahead of this forecasted time to bring the turbine system 10 offline in order to perform any necessary preventative maintenance and/or repairs instead of waiting until approximately 4000 hours, as indicated by the curve 100. Under the operating conditions depicted in FIG. 4, if an operator were to wait until the 4000 hour indicated by curve 100, it is very likely that the turbine system 10 will have dropped below 75 percent compressor efficiency without recommended maintenance, wherein further operation may result in damage or excessive wear to certain parts or components. In other words, the forecasting logic 80 may provide a more accurate prediction regarding the performance degradation of the turbine system 10 so that maintenance and/or repair scheduling may be improved. In some embodiments, a notification may be sent periodically (e.g., weekly) to the workstation 84 to indicate when forecasted performance degradation (curve 104) deviates from the baseline deterioration model (curve 100). Further, it should be noted that compressor efficiency is merely one example of a performance parameter that may be forecasted using the present technique. Indeed, the forecasting logic 80 may forecast several performance parameters simultaneously, such as compressor flow, turbine efficiency, fuel flow, and so forth.

Some examples of maintenance tasks that may be scheduled using the module degradation forecasting techniques described above in FIGS. 3 and 4 include "hot section" repair, which may refer to repair and/or maintenance of the HP turbine 16 and the combustor 12. Water wash maintenance may also be scheduled based on the forecasting techniques discussed herein. For instance, water washes may be used to recover turbine performance (e.g., recovering megawatt output), and may be performed while the turbine system 10 is online or offline. The forecasting techniques may also be utilized to predict optimal times for major maintenance procedures, such as hot section removal, detailed and/or manual cleaning of the compressor section 24, as well as performing full overhauls on all modules of the turbine system 10. Further, because the degradation rates provided by the forecasting logic 80 are personalized for a specific turbine system 10, an operator may track, based on the deviation of the forecasted degradation curve (e.g., 104) from a baseline curve 100, whether certain components or parts damage or degrade faster than other components. In the context of a service provider providing these services, the service provider may advise a client of when maintenance and/or repair of one or more components of the turbine system 10 are recommended.

In further embodiments, the turbine analyzer logic 78 of the control system, as shown in FIG. 2, provide a probabilistic approach for detecting abnormalities in performance changes of components of the turbine system 10. For instance, anomalies may be detected if performance state parameters, as estimated by the state estimator block 52, fall outside of a defined "healthy" confidence band with a selected confidence level that is determined at each time step. Thus, rather than being fixed thresholds, the confidence bands are adaptive based on the estimated parameters while the turbine system 10 is in operation.

As discussed further below, the ability to provide estimates that are evaluated against confidence bands may be achieved by propagating joint density functions of the performance parameters of interest over time. By establishing such confidence bands, healthy operation may be maintained. Further, high confidence bands are important because the data used to estimate the performance parameters may, in practice, by subjected to some degree of sensor measurement noise, sensor profile errors due to location, as well as sensor drift. Thus, the higher a confidence band, the more effectively the turbine analyzer 78 may be able to distinguish between actual anomalies versus changes induced by sensor noise and/or drift.

With these points in mind, FIG. 5 provides a flow diagram that is illustrative of a process 110 for evaluating an estimation of a state parameter of interest based on a confidence band, in accordance with an embodiment of the present invention. In one embodiment, the process 110 may be implemented within the turbine analyzer logic 78 of FIG. 2. Though only one parameter of interest is shown in FIG. 5, it should be understood that any number of performance parameters may be evaluated using the present technique.

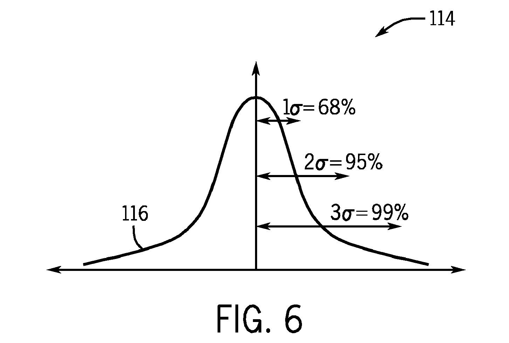

As shown in FIG. 5, the process 110 begins at logic block 112, which receives as inputs: x(k), which may represent a state estimate of the parameter of interest at time step k, and $P_k$ which may represent the covariance of estimation error for the parameter of interest at time step k. The logic block 112, based on these inputs, may determine healthy confidence bands for the parameter at time step k. In one embodiment, the confidence bands may be determined based on a probability density function of the estimation error. For example, referring to FIG. 6, a graph 114 depicting a probability density function 116 representing the estimation error at time step k is illustrated. If sensor noise is assumed to be Gaussian and the model is assumed to be linear, the probability density function 116 may have a normal Gaussian distribution.

To determine a healthy confidence level, the logic block 112 may first determine confidence bands that are three standard deviations or less based upon the error estimation probability density function 116. For instance, based on the empirical characteristics of normal distributions (also referred to as the 3-sigma rule), nearly all values of the distribution lie within three standard deviations of the mean. Specifically, approximately 68 percent of the values lie within one standard deviation ($1\sigma$) of the mean of the estimation error (representing a first confidence band on graph 114), approximately 95 percent of the values lie within two standard deviations ($2\sigma$) of the mean (representing a second confidence band on graph 114), and approximately 99 percent of the values lie within three standard deviations ($3\sigma$) of the mean (representing a third confidence band on the graph 114).

Referring back to FIG. 5, the logic block 112 may, in one embodiment, define a healthy band for the parameter at the next time step (k+1) as follows:

$$x(k) \pm \Delta(k) \qquad \text{(Equation 10)}$$

$$\Delta(k) : |\Delta| \leq 3\sigma \qquad \text{(Equation 11)}$$

wherein $\Delta(k)$ represents the deviation from the previous estimate of the parameter at time step k. Referring to Equation 11, in order to set a band corresponding up to a 99 percent confidence, the magnitude of the deviation may be less than or equal to three standard deviations of the estimation error $P_k$ at time step k. The output of the logic block 112, which provides the value(s) for $\Delta(k)$, are then provided to logic block 118. As shown, logic block 118 also receives the next estimation x(k+1) for the parameter at the next time step (k+1), and evaluates x(k+1) based on the confidence band established for the previous time step k at logic block 112. For instance, to determine whether x(k+1) falls within the healthy band, the following expression may be evaluated at logic block 118:

$$x(k+1) \notin x(k) \pm \Delta(k) \qquad \text{(Equation 12)}$$

At decision logic 120, a determination is made as to whether the parameter estimation at time k+1 falls within the confidence band. If the parameter estimation x(k+1) is within the defined healthy band having the desired confidence level, the process 110 continues to step 122 and continues operating. However, if the parameter estimation x(k+1) is outside the defined healthy band having the desired confidence level, the process 110 continues to step 124 and a notification or alarm may be sent to notify personnel responsible for monitoring the health of the turbine system 10. For instance, the notification or alarm from step 124 may be sent to the workstation 84 of FIG. 2.

Thus, to summarize, the embodiment described above with reference to FIGS. 5 and 6 obtain turbine performance sensor data, assumptions regarding sensor noise statistics (e.g., probability density functions) over time, and the statistics of the estimated parameter values at an initial time (time k). With these inputs, the technique further utilizes the performance model of the gas turbine system and a recursive estimation algorithm that may propagate the statistics of the estimation error in the performance parameters of interest over time (e.g., using an extended Kalman filter). As discussed above with reference to FIG. 2, at each sampling time, an expected value of a parameter of interest and its estimation error (probability distribution) is provided. Further, based on the techniques described in FIGS. 5 and 6, a normal or healthy band defining a desired confidence level is also determined. Thus, when the parameter falls outside of that band, an indication that there is a high probability of an anomaly in the turbine component corresponding to the parameter is communicated.

As will be understood, the various techniques described above and relating to the monitoring and detecting of the conductive state of solid state semiconductor switches are provided herein by way of example only. Accordingly, it should be understood that the present disclosure should not be construed as being limited to only the examples provided above. Indeed, a number of variations of a turbine control system, which may include the turbine state estimator and turbine analyzer logic blocks and their various respective components, as described above, may exist. Further, it should be appreciated that the above-discussed techniques may be implemented in any suitable manner. For instance, the turbine control system may be implemented using hardware (e.g., suitably configured circuitry), software (e.g., via a computer program including executable code stored on one or more tangible computer readable medium), or via using a combination of both hardware and software elements.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the invention are indicated in the following clauses:

1. A system comprising:

a power generation device configured to generate a power output;

a plurality of sensors configured to measure one or more operating parameters during operation of the power generation device, including at least an input parameter and at least an output parameter; and

a control system comprising:

estimator logic configured to determine an estimated value for a performance parameter of interest at a current time step based at least partially upon the measured input and output parameters; and

forecasting logic configured to identify a historical set of the estimated values over a plurality of previous time steps, adjust a deterioration model based on the historical set of estimated values, and forecast performance changes in the power generation device based on the adjusted deterioration model.

2. The system of clause 1, wherein the estimator logic comprises:

a model of the power generation device configured to provide a predicted output parameter based on the measured input and output parameters; and

filtering logic configured to predict the estimated value for the performance parameter of interest at the current time based at least partially upon the predicted output.

3. The system of clause 2, comprising logic configured to determine a residual value corresponding to the difference between the predicted output parameter and the measured output parameter.

4. The system of clause 2, wherein the model of the power generation device comprises at least one of a physics-based model, a data fitting model, a regression model, a neural network model, a rule-based model, or an empirical model, or any combination thereof.

5. The system of clause 2, wherein the filtering logic comprises a Kalman filter.

6. The system of clause 2, comprising a feedback loop configured to feedback the output of the filtering logic to the model, wherein the model is updated based on the feedback.

7. The system of clause 1, wherein adjusting the deterioration model based on the historical set of estimated values comprises determining a best-fit curve for the historical set of estimated values.

8. The system of clause 1, wherein determining the best-fit curve comprises using at least one of non-linear regression, linear regression, least squares analysis, weighted least squares analysis, weighted moving average analysis, moving average analysis, or some combination thereof.

9. The system of clause 1, wherein the control system is configured to compare the adjusted deterioration model against a baseline deterioration model and to update a maintenance schedule for the power generation device based on the comparison.

10. The system of clause 1, comprising a workstation, and wherein updating the maintenance schedule for the power generation device comprises transmitting one or more notifications from the control system to the workstation.

11. The system of clause 1, wherein the power generation device comprises a gas turbine engine.

12. The system of clause 11, wherein the at least one input parameter measured by the sensors comprises at least one of ambient temperature, ambient pressure, relative humidity, compressor speed ratio, inlet pressure drop, exhaust pressure drop, inlet guide vane angle, fuel temperature, generator power factor, water injection rate, and compressor bleed flow.

13. The system of clause 11, wherein the at least one output parameter measured by the sensors comprises at least one of generator output, exhaust temperature, compressor discharge pressure, and compressor discharge temperature.

14. The system of clause 11, wherein the performance parameter of interest comprises at least one of compressor efficiency, compressor flow, turbine efficiency, and fuel flow.

15. A system comprising:

a state estimator configured to determine an estimated value for a performance parameter of interest and a corresponding estimation error at each of a plurality of time steps; and

an analyzer configured to receive the estimated value of the performance parameter and the estimation error corresponding to a current time step, determine one or more confidence bands for a distribution function of the estimation error at the current time step, evaluate an estimated value of the performance parameter at the next time step based on the confidence bands determined at the current time step, and to determine whether the performance parameter at the next time step falls within a selected confidence band.

16. The system of clause 15, wherein the analyzer is configured to activate an alarm if the performance parameter at the next time step is outside of the selected confidence band.

17. The system of clause 15, wherein the distribution function comprises a probability density function having a normal Gaussian distribution.

18. The system of clause 15, wherein determining the one or more confidence bands comprises determining a first confidence band corresponding to one standard deviation of the mean of the estimation error, a second confidence band corresponding to two standard deviations of the mean of the estimation error, and a third confidence band corresponding to three standard deviations of the mean of the estimation error.

19. The system of clause 18, wherein the estimated value of the performance parameter at the next time step has a confidence of approximately 68 percent if the first confidence band is selected and the estimated value falls within the first confidence band, a confidence of approximately 95 percent if the second confidence band is selected and the estimated value falls within the second confidence band, and a confidence of approximately 99 percent if the third confidence band is selected and the estimated value falls within the third confidence band.

20. A system comprising:

means for acquiring measurements of one or more operating parameters of a turbine engine;

means for determining an estimated value of a performance parameter of interest at a current time based at least partially upon the acquired measurements;

means for adjusting a deterioration model at the current time based on a historical set of estimated values from previous times; and

means for forecasting performance changes in the turbine engine based on the adjusted deterioration model.

**Claims**

1. A system comprising:

a power generation device (10) configured to generate a power output;
a plurality of sensors (40) configured to measure one or more operating parameters during operation of the power generation device, including at least an input parameter (42a) and at least an output parameter (42b, 42c); and
a control system (50) comprising:

estimator logic (52) configured to determine an estimated value (72) for a performance parameter of interest (42) at a current time step based at least partially upon the measured input and output parameters; and
forecasting logic (78) configured to identify (90) a historical set of the estimated values over a plurality of previous time steps, adjust (92) a deterioration model (80) based on the historical set of estimated values, and forecast (94) performance changes in the power generation device based on the adjusted deterioration model.

2. The system of claim 1, wherein the estimator logic (52) comprises:

a model (54) of the power generation device (10) configured to provide a predicted output parameter (64) based on the measured input (42a) and output parameters (42b, 42c); and
filtering logic (56) configured to predict the estimated value (72) for the performance parameter of interest at the current time based at least partially upon the predicted output.

3. The system of claim 2, comprising logic (66) configured to determine a residual value (70) corresponding to the difference between the predicted output parameter (64) and the measured output parameter (42c).

4. The system of either of claim 2 or 3, wherein the model (54) of the power generation device (10) comprises at least one of a physics-based model, a data fitting model, a regression model, a neural network model, a rule-based model, or an empirical model, or any combination thereof.

5. The system of any of claims 2 to 4, wherein the filtering logic (56) comprises a Kalman filter.

6. The system of any of claims 2 to 5, comprising a feedback loop (74) configured to feedback the output of the filtering logic (56) to the model (54), wherein the model is updated based on the feedback.

7. The system of any preceding claim, wherein adjusting the deterioration model based on the historical set of estimated values comprises determining a best-fit curve for the historical set of estimated values.

8. The system of claim7, wherein determining the best-fit curve comprises using at least one of non-linear regression, linear regression, least squares analysis, weighted least squares analysis, weighted moving average analysis, moving average analysis, or any combination thereof.

9. The system of any preceding claim, wherein the control system (50) is configured to compare the adjusted deterioration model against a baseline deterioration model and to update a maintenance schedule for the power generation device (10) based on the comparison.

10. The system of any preceding claim, comprising a workstation (84), and wherein updating the maintenance schedule for the power generation device (10) comprises transmitting one or more notifications (82) from the control system (50) to the workstation.

11. The system of any preceding claim, wherein the power generation device comprises a gas turbine engine (10), and wherein the at least one input parameter measured by the sensors (40) comprises at least one of ambient temperature, ambient pressure, relative humidity, compressor speed ratio, inlet pressure drop, exhaust pressure drop, inlet guide vane angle, fuel temperature, generator power factor, water injection rate, and compressor bleed flow.

12. The system of any of claims 1 to 10, wherein the power generation device comprises a gas turbine engine (10), and wherein the at least one output parameter (42b, 42c) measured by the sensors (40) comprises at least one of generator output, exhaust temperature, compressor discharge pressure, and compressor discharge temperature.

13. A system comprising:

a state estimator (52) configured to determine an estimated value (72) for a performance parameter of interest (42) and a corresponding estimation error at each of a plurality of time steps; and
an analyzer (78) configured to receive the estimated value of the performance parameter and the estimation error corresponding to a current time step, determine one or more confidence bands for a distribution function of the estimation error at the current time step, evaluate an estimated value of the performance parameter at the next time step based on the confidence bands determined at the current time step, and to determine whether the performance parameter at the next time step falls within a selected confidence band.

14. The system of claim 13, wherein the analyzer (78) is configured to activate an alarm if the performance parameter at the next time step is outside of the selected confidence band.

**15.** The system of either of claim 13 or 14, wherein determining the one or more confidence bands comprises determining a first confidence band corresponding to one standard deviation of the mean of the estimation error, a second confidence band corresponding to two standard deviations of the mean of the estimation error, and a third confidence band corresponding to three standard deviations of the mean of the estimation error.

FIG. 1

EP 2 549 415 A1

FIG. 2

EP 2 549 415 A1

88

```
┌─────────────────────────────────────┐
│  ACQUIRE  LAST  N  STATE  ESTIMATES  │── 90
│  FOR  STATE  PARAMETER  OF  INTEREST │
└─────────────────────────────────────┘
                  │
                  ▼
┌─────────────────────────────────────┐
│  FIT  DETERIORATION  MODEL  TO  ESTIMATES  │── 92
└─────────────────────────────────────┘
                  │
                  ▼
┌─────────────────────────────────────┐
│  FORECAST  TURBINE  PERFORMANCE  CHANGES  │── 94
│  BASED  ON  LATEST  DETERIORATION  MODEL  │
└─────────────────────────────────────┘
```

# FIG. 3

110

$x(k)$ ⟶

$P_k$ ⟶

```
┌─────────────────────────────────────┐
│     DETERMINE  HEALTHY              │
│  CONFIDENCE  BANDS  FOR  A          │
│  PERFORMANCE  PARAMETER             │── 112
│  ESTIMATION  [x(k)]  AT             │
│  CURRENT  TIME  STEP  (k)           │
└─────────────────────────────────────┘
```

$x(k) \pm \Delta(k)$

$x(k+1)$ ⟶

```
┌─────────────────────────────────────┐
│  EVALUATE  CONFIDENCE  OF           │
│  PERFORMANCE  PARAMETER             │
│  ESTIMATION  [x(k)+1)]  AT          │── 118
│  NEXT  TIME  STEP  (k+1)            │
└─────────────────────────────────────┘
```

120

```
        ◇ WITHIN
          CONFIDENCE        YES      ┌──────────────────────┐
          BAND(S)      ──────────▶   │  CONTINUE  OPERATION  │── 122
          ?  ◇                       │  (NO  ALARM)          │
            │ NO                     └──────────────────────┘
            ▼
┌──────────────────────┐
│   NOTIFY  (ALARM)    │── 124
└──────────────────────┘
```

# FIG. 5

FIG. 4

FIG. 6

# EP 2 549 415 A1

Europäisches Patentamt
European Patent Office
Office européen des brevets

## EUROPEAN SEARCH REPORT

Application Number

EP 12 17 7262

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | The technical aspects of the claimed invention relate to the use of general-purpose data processing technology for processing data of an inherently non-technical nature. The information technology employed is considered to generally known. See also Official Journal 11/2007, p. 592. XP007905525 | 1-15 | INV. G06Q10/04 F01K23/00 G05B17/00 |
| L | * the whole document * | 1-15 | |

-----

TECHNICAL FIELDS SEARCHED (IPC)

G06Q
F01K
G05B

The present search report has been drawn up for all claims

| Place of search | Date of completion of the search | Examiner |
|---|---|---|
| Munich | 3 December 2012 | Hopper, Eva |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................

& : member of the same patent family, corresponding document

EPO FORM 1503 03.82 (P04C01)

20